# EUROPEAN PATENT APPLICATION

(11) **EP 1 260 421 A1**
(43) Date of publication of application: **27.11.2002**
(21) Application number: 01111907.0
(22) Date of filing: 17.05.2001
(51) Int. Cl.: B62B 1/04

(54) **Folding collapsible luggage cart**

(71) Applicant: Fang, Chih Chung, Taoyuan Hsien (TW)
(72) Inventor: Fang, Chih Chung, Taoyuan Hsien (TW)
(74) Representative: Casalonga, Axel

(57) **Abstract**

A folding collapsible luggage cart includes a fixed bearing plate (11), two movable bearing plates (12) hinged to the fixed bearing plate (11) at two sides and equipped with a respective wheel (13), a sliding plate (14) coupled to the fixed bearing plate (11) by a dovetailed joint and adapted to lock/unlock the movable bearing plate (12), a retractable handle assembly (2) pivoted to the fixed bearing plate (11), a sliding locking plate (241) adapted to lock the retractable handle assembly (2) in the operative position.

## Description

### BACKGROUND OF THE INVENTION

The present invention relates to a luggage cart and, more particularly, to a folding collapsible luggage cart that can be folded up and received in the collapsed condition to minimize space occupation when not in use.

A variety of luggage carts have been disclosed, and have appeared on the market. Conventional luggage carts occupy much storage space when not in use. In order to save storage space, various folding collapsible luggage carts have been developed. However, these conventional folding collapsible luggage carts are still not satisfactory in function. When collapsed, the wheels are still maintained in vertical, i.e., the wheels cannot be turned to a horizontal position to reduce space occupation in vertical direction. According to conventional designs, the front foot member is coupled to the bottom sidewall of the luggage bearing plate by a plug joint. When moving over an uneven floor surface, the front foot member may be forced to fall from the luggage bearing plate. Furthermore, because conventional folding collapsible luggage carts simply use a back handle to support the loaded luggage on the luggage bearing plate, the loaded luggage may be forced to fall from the luggage bearing plate when moving the cart over an uneven floor surface.

### SUMMARY OF THE INVENTION

The present invention has been accomplished provide a folding collapsible luggage cart, which eliminates the aforesaid drawbacks. It is one object of the present invention to provide a folding collapsible luggage cart, which can easily be set between the extended position and the collapsed position. It is another object of the present invention to provide a folding collapsible luggage cart, which is maintained in a flat manner to minimize space occupation when collapsed. According to one aspect of the present invention, the folding collapsible luggage cart comprises a fixed bearing plate, two movable bearing plates hinged to the fixed bearing plate at two sides and equipped with a respective wheel, a sliding plate coupled to the fixed bearing plate by a dovetailed joint and adapted to lock/unlock the movable bearing plate, a retractable handle assembly pivoted to the fixed bearing plate, a sliding locking plate adapted to lock the retractable handle assembly in the operative position. According to another aspect of the present invention, the movable bearing plates each comprise a bottom block, and a control rod longitudinally extended through the bottom block. The control rod has a curved front end adapted to work as a stand for supporting the folding collapsible luggage cart on the floor after the movable bearing plates have been extended out and locked in the extended position, and a curved rear end coupled to one wheel for enabling the respective wheel to be turned with the control rod between a horizontal position and a vertical position.

### BRIEF DESCRIPTION OF THE DRAWINGS

FIG. 1 is a perspective view of a folding collapsible luggage cart constructed according to the present invention.
FIG. 2 is an exploded view of the folding collapsible luggage cart according to the present invention.
FIG. 3 is a sectional view in an enlarged scale taken along line 3-3 of FIG. 1.
FIG. 4 is an action view of FIG. 3 showing the receiving action of the movable bearing plate.
FIG. 5 is a plain view of the cart body showing the movable bearing plates locked.
FIG. 6 is similar to FIG. 5 but showing the sliding plate moved to the unlocking position.
FIG. 7 is a perspective view showing the folding collapsible luggage cart collapsed.

### DETAILED DESCRIPTION

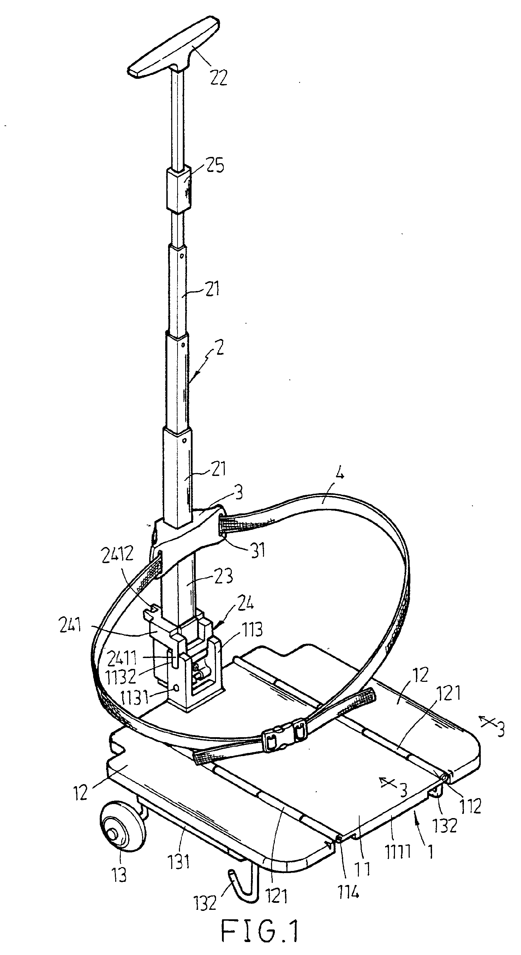

Referring to FIGS.1, 2 and 7, a folding collapsible luggage cart in accordance with tne present invention is generally comprised of a cart body **1**, a retractable handle assembly **2**, and a locating block **3**.

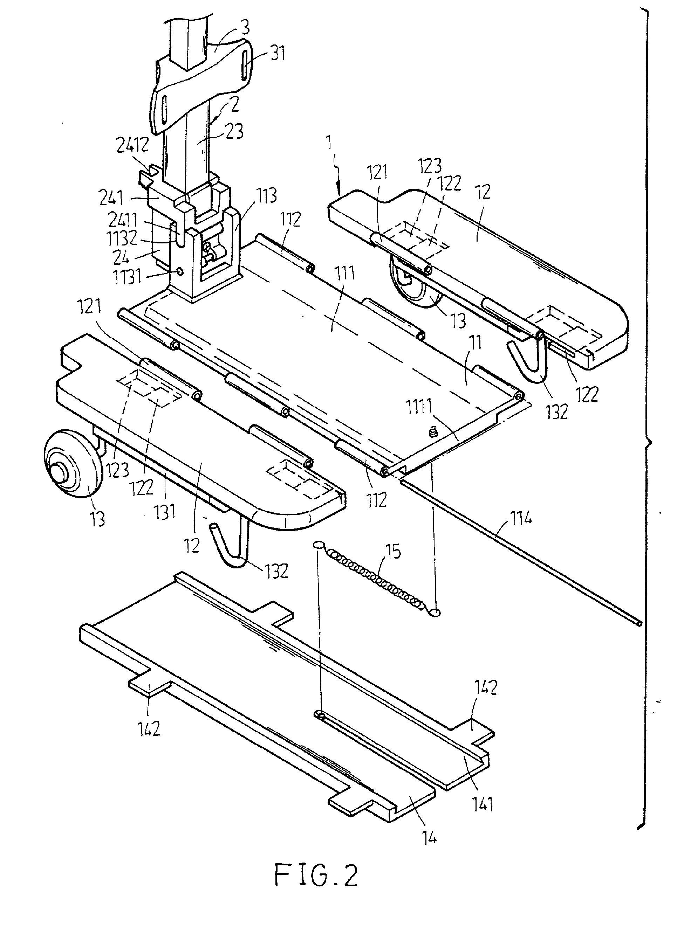

Referring to FIGS. 1 and 2 again, the cart body **1** comprises a fixed bearing plate **11,** a sliding plate **14,** two movable bearing plates **12,** and two wheels **13.** The fixed bearing plate **11** comprises two longitudinal series of barrels **112** arranged along two opposite lateral sides thereof, a dovetail block **111** longitudinally raised from the bottom sidewall thereof, and a substantially U-shaped holder block **113** upwardly extended from the rear side of the top sidewall thereof. The U-shaped holder block **113** comprises two top locating notches **1132** respectively disposed at the top of each of the two parallel upright arms thereof. The movable bearing plates **12** each have a longitudinal series of barrels **121** arranged along one lateral side thereof and respectively pivotally coupled to the two longitudinal series of barrels **112** of the fixed bearing plate **11** by a respective pivot axle **114.** Therefore, the movable bearing plates **12** are respectively hinged to the fixed bearing plate **11** at two sides, and can be respectively turned inwards and closely attached to the top sidewall of the fixed bearing plate **11.**

The movable bearing plates **12** each comprises two bottom positioning slots **122** and two bottom guide grooves **123** respectively disposed in communication with the bottom positioning slots **122,** a bottom block **131,** a control rod **132** longitudinally extended through the bottom block **131.** The control rod **132** has two curved opposite ends. The wheels **13** are respectively coupled to one end of the control rod **132** of each of the movable bearing plates **12.** The other end of the control rod **132** of each of the movable bearing plates **12** serves as a stand to support the luggage cart on the floor after the movable bearing plates **12** have been extended out of the fixed bearing plate **11.**

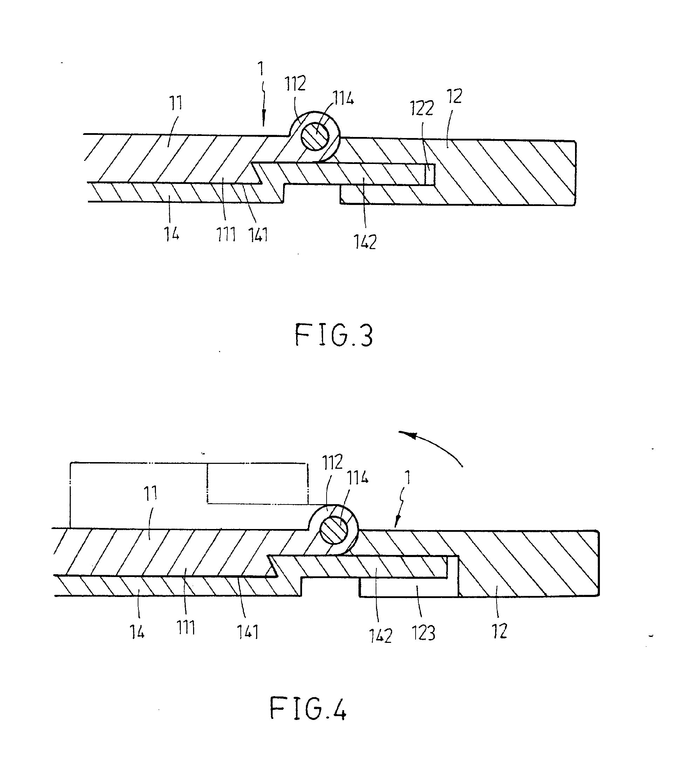

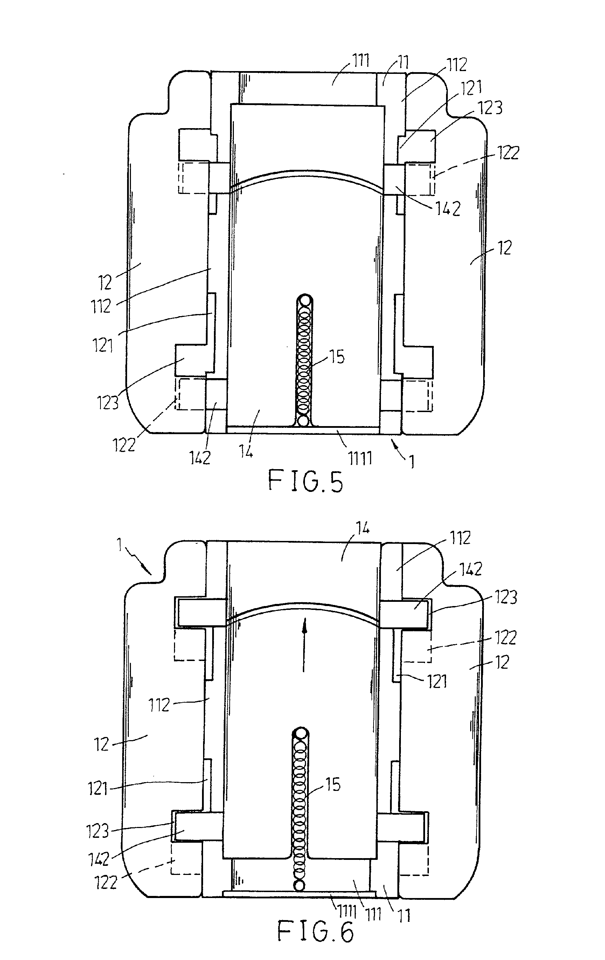

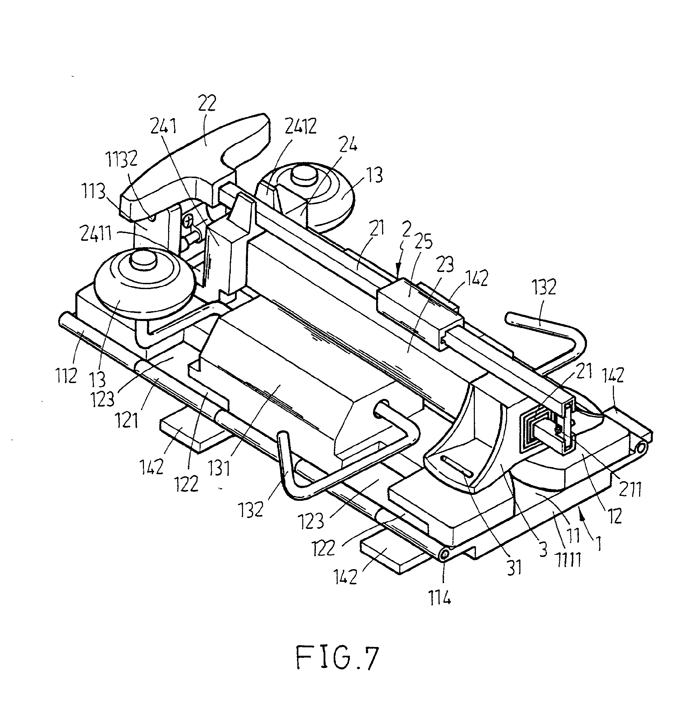

Referring to FIGS. from 2 through 6, the sliding plate **14** has a longitudinally extended dovetail groove **141** coupled to the dovetail block **111** of the fixed bearing plate **1,** and two pairs of positioning butts **142** symmetrically disposed at two opposite lateral sides thereof. A front bumper **1111** is transversely disposed at the front side of the bottom sidewall of the fixed bearing plate **11** to limit forward movement of the sliding plate **14** on the dovetail block **111** of the fixed bearing plate **1.** A spring **15** is connected between the sliding plate **14** and the fixed bearing plate **111** to hold the sliding plate **14** in place and to automatically return the sliding plate **14** backwards after the sliding plate **14** being pulled. When extending out the movable bearing plates **12,** the sliding plate **14** is pulled backwards along the dovetail block **111** of the fixed bearing plate **11** to move the butts **142** to the bottom guide grooves **123** of the movable bearing plates **12** respectively, and then the sliding plate **14** is released from the hand, enabling the sliding plate **14** to be pulled forwards by the spring **15** and stopped at the front bumper **1111** of the fixed bearing plate **11,** and at this time the butts **142** are respectively engaged into the bottom positioning slots **122** of the movable bearing plates **12** to lock the movable bearing plates **12** in the extended position in flush with the fixed bearing plate **11.** FIGS. 3 and 5 show the butts **142** respectively engaged into the bottom positioning slots **122** of the movable bearing plates **12** to lock the movable bearing plates **12** in the extended position. When pulling the sliding plate **14** backwards to move the butts **142** out of the bottom positioning slots **122** into the bottom guide grooves **123** (see FIGS. 4 and 6), the movable bearing plates **12** are unlocked, and can be turned from the extended position to the received position. After the movable bearing plates **12** have been received at the top side of the fixed bearing plate **11,** the control rod **132** of each movable bearing plate **12** is turned in one direction to move the respective wheel **13** from the vertical position to the horizontal position to minimize space occupation of the luggage cart (see FIG. 7).

Referring to FIGS. 1 and 2, the retractable handle assembly **2** comprises a coupling block **24** pivoted to the U-shaped holder block **113** of the fixed bearing plate **11** by pivots **1131** and turned relative to the U-shaped holder block **113** between a vertical position shown in FIG. 2 and a horizontal position shown in FIG. 7, a sleeve **23** fixedly fastened to the coupling block **24,** a sliding locking plate **241** longitudinally slidably coupled to the sleeve **23** and adapted to lock the retractable handle assembly **2** in the operative position (see FIG. 1), a retractable handlebar **21** hinged to the sleeve **23,** a handgrip **22** fixedly connected to one end of the retractable handlebar **21** outside the sleeve **23,** and a sliding locking barrel **25** longitudinally slidably coupled to the retractable handlebar **21** and adapted to lock the upper section of the retractable handlebar **21** in the operative position. The sliding locking plate **241** comprises an engagement portion **2411,** and a rod seat **2412.** After the coupling block **24** has been turned with the retractable handle assembly **2** the vertical operative position as shown in FIG. 1, the sliding locking plate **241** is lowered on the sleeve **23** to force the engagement portion **2411** into engagement with the top locating notches **1132** of the U-shaped holder block **113** of the fixed bearing plate **11** to lock the retractable handle assembly **2** in the vertical operative position. On the contrary, after disengagement of the sliding locking plate **241** from the top locating notches **1132** of the U-shaped holder block **113** of the fixed bearing plate **11,** the coupling block **24** is turned with the retractable handle assembly **2** from the vertical operative position shown in FIG. 1 to the collapsed horizontal position shown in FIG. 1, and then the sliding locking barrel **25** is pulled upwards to unlock the upper section of the retractable handlebar **21,** for enabling the upper section of the retractable handlebar **21** to be turned backwards and closely attached to the sleeve **23** and rested in the rod seat **2412** of the sliding locking plate **241.** After the retractable handle assembly **2** has been extended out, the sliding locking barrel **25** is moved to the connection between the first (upper) section and second section of the retractable handlebar **21** and forced into engagement with a raised portion **211** of the retractable handlebar **21** to lock the first and second sections of the retractable handlebar **21** in a longitudinally aligned condition.

Further, the locating block **3** is fixedly mounted on the sleeve **23** of the retractable handle assembly **2,** having two insertion holes **31** at two sides, and a harness **4** is installed in the insertion holes **31,** and adapted to secure the loaded luggage in position.

A prototype of folding collapsible luggage cart constructed with the features of FIGS. 1∼7. The folding collapsible luggage cart functions smoothly to provide all of the features discussed earlier.

Although a particular embodiment of the invention has been described in detail for purposes of illustration, various modifications and enhancements may be made without departing from the spirit and scope of the invention. Accordingly, the invention is not to be limited except as by the appended claims.

## Claims

1. A folding collapsible luggage cart comprising:
a fixed bearing plate, said fixed bearing plate comprising a top sidewall, a bottom sidewall, a longitudinal dovetail block integral with said bottom side wall, and a holder block upwardly extended from said top sidewall near a rear side of said fixed bearing plate, said holder block comprising at least one locating notch at a top side thereof;
two movable bearing plates respectively coupled to two opposite lateral sides of said fixed bearing plate by hinge means and turned between a received position where said movable bearing plates are respectively attached to the top sidewall of said fixed bearing plate and an extended position where said movable bearing plates are disposed in flush with said fixed bearing plate, said movable bearing plates each comprising a plurality of positioning slots, and a plurality of guide grooves respectively disposed in communication with said positioning slots;
a sliding plate coupled to said dovetail block of said fixed bearing plate and adapted to lock said movable bearing plates in said extended position, said sliding plate comprising a plurality of butts symmetrically disposed at two opposite lateral sides thereof, and a longitudinal dovetail groove coupled to said dovetail block of said fixed bearing plate for enabling said sliding plate to be moved on said dovetail block of said fixed bearing plate between a first position where said butts are respectively moved to the guides grooves of said movable bearing plates for enabling said movable bearing plates to be turned relative to said fixed bearing plate between said received position and said extended position, and a second position where said butts are moved into the positioning slots of said movable to lock said movable bearing plates in said extended position after said movable bearing plates have been extended out;
two wheels respectively coupled to said movable bearing plates; and
a folding collapsible retractable handle assembly pivoted to said holder block of said fixed bearing plate, said folding collapsible retractable handle assembly comprising a coupling block pivoted to said holder block of said fixed bearing plate by pivot means and turned relative to said holder block between a horizontal position and a vertical position, a sleeve fixedly fastened to said coupling block, a sliding locking plate moved along said sleeve and adapted to lock said coupling block in said vertical position, said sliding locking plate comprising an engagement portion, which is moved with said sliding locking plate in and out of said at least one locating notch of said holder block to lock/unlock said coupling block, a folding collapsible retractable handlebar, and a handgrip fixedly fastened to one end of said folding collapsible retractable handlebar outside said sleeve.

2. The folding collapsible luggage cart of claim 1 wherein said movable bearing plates each comprise a bottom block, and a control rod longitudinally extended through said bottom block, said control rod each having a curved front end adapted to work as a stand for supporting the folding collapsible luggage cart on the floor after said movable bearing plates have been extended out and locked in said extended position, and a curved rear end coupled to one of said wheels for enabling the respective wheel to be turned with said control rod between a horizontal position and a vertical position.

3. The folding collapsible luggage cart of claim 1 wherein said sliding locking plate comprises a rod seat adapted to receive said folding collapsible retractable handlebar when said folding collapsible retractable handle assembly is collapsed.
